# EUROPÄISCHE PATENTANMELDUNG

(11) **EP 3 165 780 A1**
(43) Veröffentlichungstag der Anmeldung: **10.05.2017**
(21) Anmeldenummer: 15193240.7
(22) Anmeldetag: 05.11.2015
(51) Int. Cl.: F16B 19/00, F16B 19/02

(54) **SPANNHUELSE**

(71) Anmelder: Rollstar AG, 5704n Egliswil (CH)
(72) Erfinder: Rauch, Patrick, 5046 Walde (CH); Ziegler, Ulrich, 5707 Seengen (CH)
(74) Vertreter: Tompkin, Christine

(57) **Zusammenfassung**

Es wird eine Spannhülse (1) mit einem länglichen Hohlkörper und einem durchgehenden Längsschlitz (4) offenbart. Erfindungsgemäss weist die Spannhülse (1) eine äussere Mantelfläche (3) auf, die über die gesamte Länge der Hülse doppelkonisch ausgebildet ist. Dabei erstreckt sich von jedem Ende (2a, 2b) der Hülse (1) je eine Konusform mit sich stetig vergrösserndem Durchmesser bis zu einer umlaufenden Scheitellinie (3a), an dem die zwei Konusformen zusammentreffen. Die Spannhülse (1) wird zur Verbindung von zwei Werk- oder Maschinenteilen verwendet, die je eine Bohrung aufweisen, die eine der Konusform der Spannhülse angepasste Form besitzen, wobei die Spannhülse in ihrem Durchmesser ein Übermass aufweist. Die erfindungsgemässe Spannhülse (1) zeichnet sich durch erhöhte Sitzfestigkeit aus und bewirkt und zugleich ein erleichtertes Einführen der Hülse (1) in eine dafür vorgefertigte Bohrung. Insbesondere ist aufgrund der doppelt konischen Form ein axiales Verschieben und Lösen der Spannhülse (1) aus einer Bohrung verunmöglicht.

## Beschreibung

### Technisches Gebiet

Die Erfindung betrifft eine Spannhülse.

### Stand der Technik

Spannhülsen, auch mit dem Begriff Spannstift bezeichnet, sind allgemein bekannt. Sie werden zur Verbindung und Befestigung von Elementen, zum Beispiel Maschinenelementen verwendet und kommen unter anderem in der Automobilindustrie, Land- und Baumaschinenbau sowie Schiffbau zum Einsatz. Sie dienen der Verbindung von Werkstücken, der Zentrierung von Elementen, der Übertragung von Scherkräften oder der Absicherung von Drehmomenten. Spannhülsen bilden eine Alternative zu anderen Verbindungselementen wie Zylinderstiften, Nieten, Gewindestiften oder Schrauben. Sie weisen eine grundsätzlich zylindrische, hohle Bauform auf und sind längsseitig durchgehend mit einem Schlitz versehen. Zur einfacheren Einführung in eine Bohrung sind sie an beiden Enden gefast, d.h. an den Endkanten abgeschrägt oder abgerundet. Sie sind typischerweise aus Federstahl gefertigt. Aufgrund des Materials sowie des Längsschlitzes sind sie elastisch, wodurch die Montage in eine vorgefertigte Bohrung in den zu verbindenden Elementen durch Schieben oder Hammerschlage ermöglicht ist.

Bei Anwendungen im Maschinenbau, insbesondere Schwermaschinenbau, bei dem die zu übertragenden Kräfte gross sind, sind die Anforderungen an die Spannhülse selbst, ihre Herstellung, die Montage sowie Demontage entsprechend hoch. Bei Anwendungen im Leichtbau, wie zum Beispiel der Verbindung von Bestandteilen von Möbeln oder Elektrogeräten und somit zur Übertragung von kleinen Kräften, sind auch die genannten Anforderungen entsprechend kleiner.

EP2141365 offenbart eine Spannhülse der oben erwähnten allgemeinen Art mit einem durchgehenden Längsschlitz und einer Fase an beiden ihrer Enden. Die angeschrägten Fasen erstrecken sich über den Randbereich und dienen der Vermeidung von Spanbildung beim Eintreiben der Hülse in ein Werkstück. Der Längsschlitz ist zudem in diesen Randbereichen schmaler ausgeführt als im Längsbereich der Hülse.

DE1400836 offenbart eine Hülse mit Längsschlitz und konischen Randbereichen an beiden Enden. Auch der Schlitz ist in den Endbereichen konisch eingezogen, sodass an den Enden die Schlitzkanten sich gegenseitig berühren.

Es sind zudem Positioniervorrichtungen bekannt, die Spannhülsen ähnlich sind, die jedoch ohne Längsschlitz oder nicht hohl sondern voll ausgeführt sind. Diese weisen keine eigene Federkraft auf und werden zusammen mit weiteren Elementen wie Schrauben oder Nutmuttern angewendet. Zum Beispiel offenbart EP0555810 eine Positioniervorrichtung bestehend aus einem Hohlzylinder mit einem vollen Zylindermantel über 360°. Der Zylindermantel weist eine konische und mit Aussparungen ausgebildete Abstützfläche auf. Die Vorrichtung wird in entsprechend konisch ausgeführte Bohrungen eingeführt, wobei die Aussparungen am Zylindermantel eine Federkraft ermöglichen.

### Beschreibung der Erfindung

Der vorliegenden Erfindung ist die Aufgabe gestellt, die bekannte Spannhülse mit hohlem Zylinder und durchgehendem Längsschlitz weiterzuentwickeln. Insbesondere soll die Weiterentwicklung eine verbesserte Anwendung für die Übertragung von sehr hohen Scherkräften und die Absicherung von sehr hohen Drehmomenten ermöglichen, wie sie generell zur Übertragung hoher Kräfte und Drehmomente, wie zum Beispiel Wellen-, Flanschverbindungen mit Torsionsbelastungen,arbeitenden Getrieben entstehen.

Es wird eine Spannhülse mit einem länglichen Hohlkörper und einem durchgehenden Längsschlitz offenbart. Gemäss der Erfindung weist die Spannhülse eine äussere Mantelfläche auf, die über die gesamte Länge der Hülse doppelkonisch ausgebildet ist. Dabei erstreckt sich von jedem Ende der Hülse je eine Konusform mit sich stetig vergrösserndem Durchmesser bis zu einer Scheitellinie, an der die zwei Konusformen zusammentreffen.
Die erfindungsgemässe Spannhülse wird zur Verbindung von zwei Werk- oder Maschinenteilen verwendet, die je eine Bohrung aufweisen, die eine der Konusform der Spannhülse angepasste Form und einen leicht kleineren Durchmesser an ihrer Öffnung besitzen. Die erfindungsgemässe Spannhülse wird in die Bohrung des ersten Teils bis fast zur Mitte der Spannhülse und fast dem Ende der einen Konusform eingeführt oder eingelegt. Darauf wird das zweite zu verbindende Teil mit entsprechender Bohrung auf die aus dem ersten Teil herausragende Hälfte der Spannhülse gesetzt. Die beiden Teile werden sodann miteinander fest verbunden, beispielsweise mittels Schrauben oder Flanschen. Dabei wird die Spannhülse zusammengedrückt und vollständig in die konusförmigen Bohrungen eingedrückt.

Das Wesen der Erfindung ist eine Spannhülse mit doppelkonisch ausgeführter Aussenform, die aufgrund dieser Form eine Erhöhung der Sitzfestigkeit der Spannhülse bewirkt und zugleich ein erleichtertes Einführen der Hülse in eine dafür vorgefertigte Bohrung ermöglicht. Insbesondere verunmöglicht sie aufgrund dieser Konusform ein axiales Verschieben und Lösen der Spannhülse aus einer Bohrung.

In einer Ausführung der Erfindung beträgt der von jedem der beiden Konus eingeschlossene Vollwinkel einen Wert in einem Bereich von beispielsweise zwischen 0° und 60° betragen. In weiteren Ausführungen der Erfindung liegt der von beiden Konus umschlossene Vollwinkel zwischen 0° und 30°; in einer weiteren Ausführung liegt dieser Konuswinkel zwischen 0° und 10°.

In einer Ausführung der Erfindung ist die Spannhülse symmetrisch ausgeführt, indem beide Konusformen gleich lang sind und beide Konusformen gleiche Konuswinkel aufweisen und die Hülse in ihrer Mitte den grössten Durchmesser aufweist.

In einer weiteren Ausführung ist die erfindungsgemässe Spannhülse asymmetrisch ausgeführt. In einer ersten Variante sind die beiden Konusformen ungleich lang ausgeführt. In einer weiteren Variante weisen die beiden Konusformen ungleiche Konuswinkel auf. Eine Asymmetrie der Spannhülse kann auch eine Kombination von ungleichen Konuswinkeln und ungleichen längen der beiden Konusformen aufweisen.

In einer weiteren Ausführung der Erfindung weist der Längsschlitz über die gesamte Länge der Hülse eine konstante Breite auf. Als Variante kann der Längsschlitz auch eine variable Breite aufweisen. Weitere Varianten weisen einen Längsschlitz in gewellter Form oder einen spiralförmig um die Hülse herum führender Längsschlitz auf.

Die doppelkonische Form ist mit verschiedenen Winkeln der beiden Konus ausführbar, wobei der Winkel jeweils für spezifische Anwendungen angepasst werden kann. Entsprechend dem Winkel und einem Übermass des Aussendurchmessers der Hülse relativ zum Durchmesser einer dafür bestimmten Bohrung ergibt sich auch eine entsprechende Spannkraft der Hülse.

Bei bekannten Spannhülsen wird der Aussen- und Innendurchmesser so dimensioniert, dass die im eingebauten Zustand zulässige Spannung des Werkstoffs nicht überschritten wird. Die erfindungsgemässe beidseitig konusförmige Spannhülse wird zu diesem gleichen Zweck ebenfalls bezüglich Aussen- und Innendurchmesser jedoch zusätzlich bezüglich ihrem Konuswinkel oder ihren Konuswinkeln dimensioniert. Beim Einbau der Spannhülse wird diese jeweils verformt und zusammengedrückt, wobei die Spannhülse nach deren Entfernung aus der Bohrung in ihre ursprüngliche Form zurückfedert. Es entsteht also keine bleibende Verformung der Spannhülse. Nach einem Herausnehmen der Spannhülse kann diese erneut und mehrmals verwendet werden.

Durch die doppelte konische Form mit Längsschlitz wird eine im Vergleich zu derzeit handelsüblichen Spannhülsen eine verbesserte Passform erreicht. Dies ist insbesondere beim Einsatz bei mit hohen Kräften und niederen Drehzahlen arbeitenden Getrieben vorteilhaft. Eine erhöhte Passform vermeidet, dass sich die Spannhülse bei Vibrationen im Getriebe ungewollt löst. Zudem vermeidet die doppelte konische Form inhärent ein axiales Verschieben der Spannhülse gänzlich. Dadurch ergibt sich eine sehr hohe Sitzfestigkeit, die insbesondere beim Einsatz in Maschinen zur Übertragung von Kräften und grossen Drehmomenten wie zum Beispiel Baumaschinen oder Werkzeugmaschinen besonders von Vorteil ist.

Die doppelkonische Form ermöglicht eine im Vergleich vereinfachte Montage. Das Einführen in konusförmige Sacklöcher ist auch ohne den Einsatz von Montagewerkzeugen möglich. Aufgrund der erfindungsgemässen Form ist auch die Spanbildung bei der Montage vermindert. Die Demontage ist entsprechend ebenfalls erleichtert, die über ein Gewinde oder eine Ausziehrille in der Bohrung ausgeführt werden kann. Dies erfolgt zum Beispiel mittels eines spezifischen Ausziehwerkzeuges, welches in das Gewinde oder die Rille in der Bohrung eingreift.

Die doppelte Konusform ist im Vergleich zu anderen, komplizierteren Formen, wie zum Beispiel aus EP555810 bekannt einfacher herzustellen. Zudem kann für die erreichte konische Form eine höhere Genauigkeit, insbesondere Rundheit erreicht werden.

Die Erfindung wird anhand eines in den schematischen Zeichnungen dargestellten Ausführungsbeispiels näher erläutert.

### Kurze Beschreibung der Figuren

Fig. 1a zeigt eine perspektivische Ansicht einer erfindungsgemässen Spannhülse.
Fig. 1b zeigt eine Draufsicht der Längserstreckung der Spannhülse gemäss Ib in Fig. 1a.
Fig. 2 zeigt eine Ansicht des Endes der erfindungsgemässen Spannhülse gemäss II in Fig. 1a.
Fig. 3 zeigt einen Längsschnitt der erfindungsgemässen Spannhülse gemäss III-III in Fig. 2 bereit für einen Einsatz in eine Bohrung eines Werkteils mit entsprechend ausgebildeter Konusform.

In den Figuren sind für dieselben Elemente jeweils dieselben Bezugszeichen verwendet worden und erstmalige Erklärungen betreffen alle Figuren, wenn nicht ausdrücklich anders erwähnt.

### Ausführungsbeispiele der Erfindung

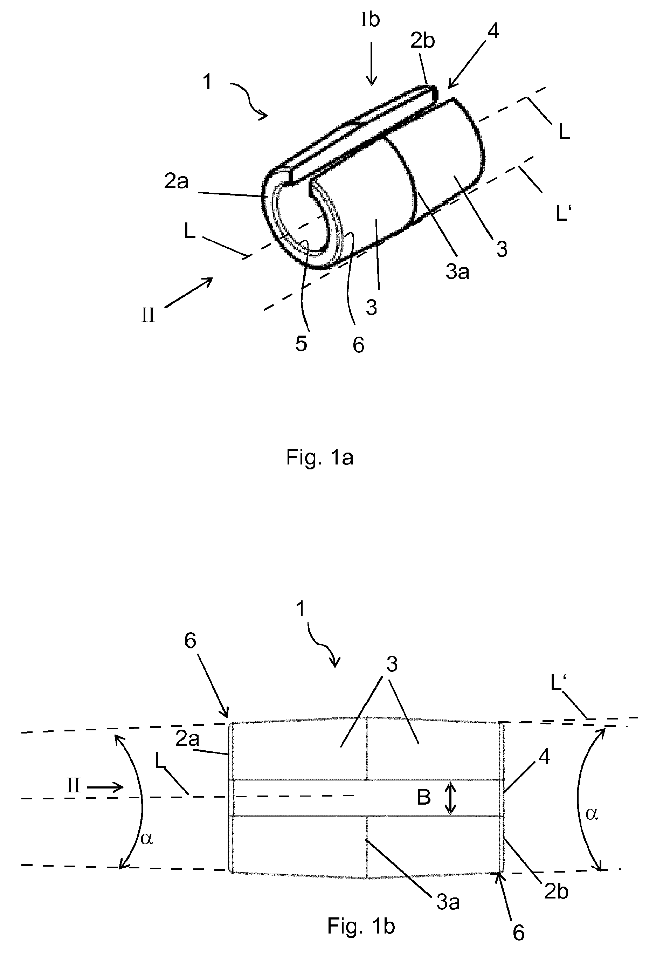

Eine beispielhafte Ausführung der erfindungsgemässen Spannhülse 1 gemäss den Figuren ist von grundsätzlich länglicher hohlen Form mit einer Längsachse L, zwei Enden 2a und 2b, und einem Mantel 3. Wie in Figuren 1a und 1 b gezeigt verläuft von dem Ende 2a zum Ende 2b entlang der gesamten Länge der Hülse 1 ein durch die gesamte Wand der Hülse durchgehender Längsschlitz 4. Der Mantel 3 ist insbesondere an seiner Aussenfläche 3 doppelt konisch ausgeformt, indem der von seinem kleinstem Umfang aus an jeweils den beiden Enden 2a und 2b der Spannhülse 1 sich jeweils konisch in einem kleinen Winkel zur Längsachse L und zur Mitte der Spannhülse hin stetig ausweitet. Die Hilfslinie L' parallel zur Längsachse L weist zudem auf die konische Form des Mantels 3 hin. Im Bereich der Mitte der Spannhülse 1 weist die Spannhülse den grössten Umfang auf. Dort treffen sich die beiden Konusflächen 3 in einer umlaufenden Scheitellinie 3a. Der Längsschlitz 4 weist über seine gesamte Länge sowie seine Tiefe eine gleichmässig konstante Breite B auf. Der Längsschlitz kann auch andere Formen aufweisen wie zum Beispiel eine Wellenform (anstelle von gerader Form) oder Spiralform, indem der Schlitz über die Länge der Hülse um die Hülse herum verläuft. Zudem kann er auch in seiner Breite verjüngt ausgeführt werden, dies über seine Länge und/oder über seine Tiefe.
Die Innenfläche des Mantels 3 der Spannhülse 1 ist gleichmässig zylindrisch ausgeführt. Die Endkanten 5 und 6 an der inneren bzw. äusseren Mantelfläche sind jeweils abgerundet oder mit einer Fase ausgeführt.

In Figur 1 b ist die doppelt konische Form der Hülse 1 aufgezeigt. Von beiden Enden 2a und 2b verlaufen konisch verlaufende Mantelflächen 3 zur Mitte der Hülse hin und zur Scheitellinie 3a. Beide der konischen Formen sind hier gleich ausgeführt, sodass die Spannhülse bezüglich ihrer Scheitellinie 3a symmetrisch ist. An einem der beiden Konus am Ende 2a ist der vom Konus umschlossene Vollwinkel α bezeichnet. Der Konus mit Endfläche 2b weist den gleichen Konuswinkel α auf. In einer Ausführung beträgt dieser Vollwinkel α beispielsweise 5°. Dieser Winkel α kann in weiteren Ausführungsbeispielen auch andere vorbestimmte Werte aufweisen, wodurch die Verspannkraft der Hülse, d.h. die Spannkraft für die Montage, je nach gewünschter Anwendung variiert und beeinflusst werden kann. Je grösser der Winkel in Kombination mit dem Innendurchmesser und dem Übermass des Aussendurchmessers relativ zum Durchmesser einer dafür bestimmten Bohrung ausgeführt ist, je mehr Spannkraft der Hülse selbst kann erreicht werden. Die Breite B des Längsschlitzes 4 ist in dem in der Figur 1 b gezeigten Beispiel über die gesamte Länge der Hülse konstant.

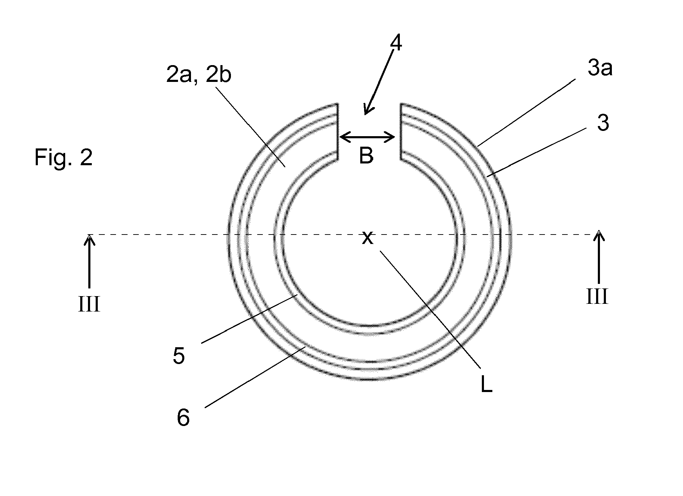

Figur 2 zeigt eine Frontansicht der Hülse auf eine Endfläche 2a oder 2b mit jeweils dem kleinsten Durchmesser der Hülse 1. Der Längsschlitz 4 weist in diesem Beispiel über seine Tiefe eine gleichmässige Breite B auf. In dieser Frontansicht sind die Abrundungen 5 und 6 an den inneren bzw. äusseren Kante der Endfläche 2a, b dargestellt sowie die sich ausweitende Mantelfläche 3 mit ihrem grösstem Ausmass an der Scheitellinie 3a. In dieser bevorzugten Ausführung der erfindungsgemässen Spannhülse sind die Enden 2a, 2b abgerundet wie in der Figur 1b und 2 gezeigt. Die leichten Abrundung 6 an der äusseren Kante dient dazu, eine Verkantung der Hülse bei ihrer Montage zu vermeiden.

Die Wandstärke des Zylindermantels 3 kann je nach Anwendung der Spannhülse dahingehend unterschiedlich ausgeführt werden, um eine unterschiedliche Steifigkeit zu erreichen und dadurch die Aufnahme von entsprechend unterschiedlichen Scherkräften zu ermöglichen.

Die erfindungsgemässe Spannhülse wird in einer ersten Ausführung aus einem metallischen Werkstoff wie zum Beispiel Stahl gefertigt wie auch bisher bekannte Spannhülsen aus diesem Material gefertigt sind. Die besonderen Eigenschaften der erfindungsgemässen Spannhülse sind jedoch durch ihre besondere doppelkonische Form über ihre gesamte Länge begründet. Deshalb sind auch andere Werkstoffe für die erfindungsgemässe Spannhülse denkbar wie zum Beispiel Kunststoff oder Naturwerkstoffe wie zum Beispiel Holz.

Zur Montage einer erfindungsgemässen Spannhülse werden Bohrungen entsprechend dem Konuswinkel der Spannhülse in den zu verbindenden Teilen ausgeführt. Der Winkel der Bohrung entspricht dabei dem Konuswinkel der Hülse.

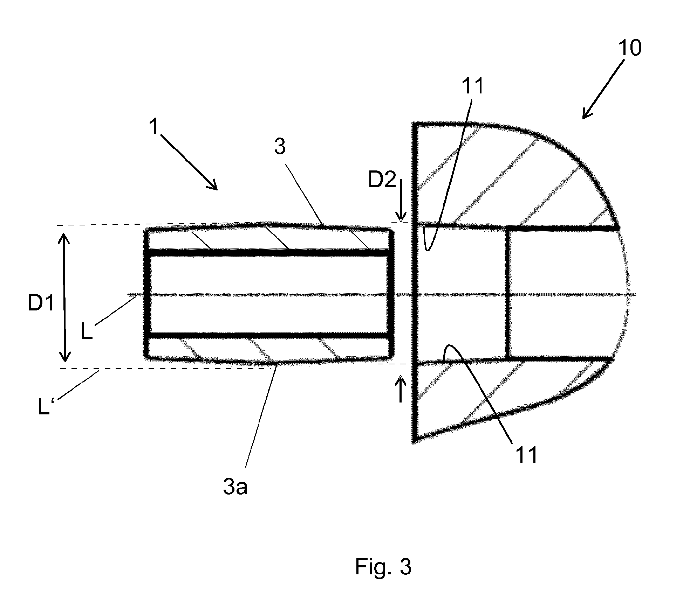

Figur 3 zeigt in einem Querschnitt eine erfindungsgemässe Hülse 1 bereit für den Einsatz in eine dafür vorgefertigten Bohrung 11 in einem Werkteil 10. Die Bohrung 11 ist konusförmig ausgebildet mit einem der Spannhülse angepassten Konuswinkel. Der Bohrungsdurchmesser D2 an der Oberfläche des Werkteils 10 ist im Vergleich zum Maximalaussendurchmesser D1 der Spannhülse 1 um ein vorbestimmtes Mass leicht verkleinert. Die Hülse 1 wird in die Bohrung 11 eingeführt, wobei sich die Montage aufgrund der Konusform rasch mit vergleichsweise wenig Aufwand und ohne Lärmemissionen ausführen lässt. Nach dem Einsatz der Hülse 1 ragt die Scheitellinie 3a der Hülse 3a noch leicht aus der Bohrung 11 hervor. Ein zweites Werkteil mit entsprechend konisch geformten Bohrungen wird sodann auf das erste Werkteil aufgesetzt. Beim Zusammenziehen oder Zusammenpressen der beiden Werkteile, wird die Hülse unter ihrer Spannkraft zusammengedrückt und bis zu ihrer Scheitellinie 3a hineingedrückt.

Durch die erfindungsgemässe konische Form der Spannhülse wird eine erhöhte Sitzfestigkeit der Hülse in den verbundenen Teilen erreicht.
Zudem kann die erfindungsgemässe Spannhülse auch als Zentrierstift zur Zentrierung von Werkteilen verwendet werden.

### Bezugszeichenliste

- 1: Spannhülse
- 2a,b: Enden der Spannhülse
- 3: konusförmige Aussenfläche des Mantels
- 3a: umlaufende Scheitellinie zwischen zwei konusförmigen Mantelflächen
- 4: Längsschlitz
- 5: Abrundung an innerer Kante
- 6: Abrundung an äusserer Kante
- 7:
- 8:
- 9:
- 10: Werkteil
- 11: Konus in der Bohrung
- B: Breite des Längsschlitz
- D1: Durchmesser Spannhülse
- D2: Durchmesser Bohrung
- α: Konuswinkel
- L: Längsachse der Spannhülse

## Patentansprüche

1. Spannhülse (1) mit einem länglichen Hohlkörper und einem durchgehenden Längsschlitz (4)
**dadurch gekennzeichnet, dass**
die Spannhülse (1) eine äussere Mantelfläche (3) aufweist, die über die gesamte Länge der Hülse (1) doppelkonisch ausgebildet ist, wobei die Mantelfläche (3) von jedem Ende (2a, 2b) der Hülse (1) jeweils in einer Konusform bis zu einer Scheitellinie (3a) verläuft und die Hülse an dieser Scheitellinie (3a) ihren grössten Umfang aufweist.

2. Spannhülse (1) nach Anspruch 1
**dadurch gekennzeichnet, dass**
der Konuswinkel (α) der Mantelfläche (3) der Spannhülse in einem Bereich zwischen 0° und 60° liegt.

3. Spannhülse (1) nach Anspruch 2
**dadurch gekennzeichnet, dass**
der Konuswinkel (α) der Mantelfläche (3) der Spannhülse in einem Bereich zwischen 0° und 30° liegt.

4. Spannhülse (1) nach Anspruch 3
**dadurch gekennzeichnet, dass**
der Konuswinkel (α) der Mantelfläche (3) der Spannhülse in einem Bereich zwischen 0° und 10° liegt.

5. Spannhülse (1) nach einem der Ansprüche 1 bis 4
**dadurch gekennzeichnet, dass**
die Spannhülse (1) bezüglich ihrer Scheitellinie (3a) symmetrisch ausgebildet ist.

6. Spannhülse (1) nach einem der Ansprüche 1 bis 4
**dadurch gekennzeichnet, dass**
die Spannhülse (1) bezüglich ihrer Scheitellinie (3a) asymmetrisch ausgebildet ist, indem der Konuswinkel (α) der einen Hälfte der Hülse vom Konuswinkel der zweiten Hälfte der Hülse unterschiedlich ist.

7. Spannhülse (1) nach einem der Ansprüche 1 bis 4
**dadurch gekennzeichnet, dass**
die Spannhülse (1) bezüglich ihrer Scheitellinie (3a) asymmetrisch ausgebildet ist, indem Länge der einen Hälfte der Hülse von der Länge der zweiten Hälfte der Hülse unterschiedlich ist.

8. Spannhülse (1) nach einem der Ansprüche 1 bis 7
**dadurch gekennzeichnet, dass**
der Längsschlitz (4) über seine Tiefe eine gleichmässige Breite (B) aufweist.

9. Spannhülse (1) nach einem der Ansprüche 1 bis 8
**dadurch gekennzeichnet, dass**
der Längsschlitz (4) über seine Länge eine gleichmässige Breite (B) aufweist.

10. Spannhülse (1) nach einem der Ansprüche 1 bis 7
**dadurch gekennzeichnet, dass**
der Längsschlitz (4) eine Wellenform oder Spiralform aufweist oder über seine Länge und/oder Tiefe verjüngt ausgebildet ist.

11. Spannhülse (1) nach einem der Ansprüche 1 bis 10
**dadurch gekennzeichnet, dass**
die Spannhülse (1) aus einem metallischen Werkstoff gefertigt ist.

12. Spannhülse (1) nach einem der Ansprüche 1 bis 10
**dadurch gekennzeichnet, dass**
die Spannhülse (1) aus einem Kunststoff oder einem Naturwerkstoff gefertigt ist.
